(19) Europäisches Patentamt
European Patent Office
Office européen des brevets

(11) **EP 1 887 404 B1**

(12) **EUROPÄISCHE PATENTSCHRIFT**

(45) Veröffentlichungstag und Bekanntmachung des Hinweises auf die Patenterteilung:
**01.10.2014 Patentblatt 2014/40**

(51) Int Cl.:
***G02B 23/08*** *(2006.01)*

(21) Anmeldenummer: **07015488.5**

(22) Anmeldetag: **07.08.2007**

(54) **Periskop und Verfahren zur Auslegung einer optischen Übertragungsstrecke in einem Periskop**

Periscope and method for aligning an optical transmission line in a periscope

Périscope et procédé destiné à la conception d'un trajet de transmission optique dans un périscope

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **08.08.2006 DE 102006037304**

(43) Veröffentlichungstag der Anmeldung:
**13.02.2008 Patentblatt 2008/07**

(73) Patentinhaber: **Carl Zeiss Optronics GmbH 73447 Oberkochen (DE)**

(72) Erfinder:
• **Schlemmer, Harry, Dr. 73447 Oberkochen (DE)**

• **Mayer, Karl 89441 Medlingen (DE)**

(74) Vertreter: **Lorenz, Markus Lorenz & Kollegen Patentanwälte Partnerschaftsgesellschaft mbB Alte Ulmer Straße 2 89522 Heidenheim (DE)**

(56) Entgegenhaltungen:
**EP-A1- 1 467 237      GB-A- 1 062 710 US-A- 3 133 143**

**Beschreibung**

Die Erfindung betrifft ein Periskop, aufweisend ein erstes optisches Umlenkelement, ein zweites optisches Umlenkelement, ein Okular und eine optischen Übertragungsstrecke mit mindestens zwei optischen Elementen, die entlang einer optischen Achse der optischen Übertragungsstrecke angeordnet sind und ein Objektbild eines Zwischenbildes auf einer abschließenden Bildebene der optischen Übertragungsstrecke erzeugen, wobei die Übertragungsstrecke quer zur optischen Achse biegsam ist und sich die mindestens zwei optischen Elemente bei einer Verbiegung entsprechend einer sich einstellenden Biegelinie senkrecht zur optischen Achse verschieben, so dass ein Versatz des Objektbildes entsteht, wobei ferner die mindestens zwei optischen Elemente derart entlang der optischen Achse angeordnet sind, dass Versatzanteile der mindestens zwei optischen Elemente, die durch die Verschiebung der mindestens zwei optischen Elemente verursacht sind, einander kompensieren, so dass der Versatz des Objektbildes in der abschließenden Bildebene minimiert ist.

Die Erfindung wird durch die Patentansprüche bestimmt.

Ein Periskop der vorstehend genannten Art ist bekannt, und zwar für den Einsatz bei Unterseebooten, beispielsweise aus der GB 1 062 710, der US 3,352,618, der US 3,261,260 und der EP 0 123 628.

Eine optische Übertragungsstrecke wird beispielsweise in einem Periskop, einem Teleskop oder einer anderen optischen Beobachtungsvorrichtung verwendet. Mittels der optischen Übertragungsstrecke wird ein erzeugtes Zwischenbild in einer abschließenden Bildebene als Objektbild abgebildet. Das Objektbild in der abschließenden Bildebene wird entweder mittels eines Okulars betrachtet, oder in der Bildebene ist ein lichtempfindliches Element einer Kamera, beispielsweise einer CCD-Kamera, die das Objektbild speichert, angeordnet.

Ein Periskop ist ein Sehrohr zur verdeckten Beobachtung eines Objektes aus einem Schutzort heraus und wird beispielsweise in U-Booten und in gepanzerten Fahrzeugen eingesetzt. Im Rahmen der vorliegenden Erfindung sind nur Periskope für den Einsatz in gepanzerten Fahrzeugen von Interesse.

Ein Periskop weist ein, auch als Grundkörper bezeichnetes, starres Rohr auf, an dessen Öffnungen optische Umlenkelemente angeordnet sind. Diese lenken senkrecht in das Rohr einfallende Lichtstrahlen, die von einem zu betrachtenden Objekt reflektiert werden, in das Rohr und parallel versetzt zur ursprünglichen Einfallsrichtung wieder heraus. Zur Beobachtung des Objektes weist das Periskop mindestens eine Okularlinse auf, die am Ende einer optischen Übertragungsstrecke angeordnet ist. Die optische Übertragungsstrecke ist in einem Tubus angeordnet und bildet zusammen mit diesem einen Okulararm. Ein Periskop dieser Art ist in der EP 1 467 237 A1 beschrieben.

Herkömmliche Panzer, beispielsweise des Typs "Leopard", sind als schwere Fahrzeuge von typischerweise 60 t Gewicht ausgelegt. Bei dieser Bauweise kommt es im Bereich der Wanne und des Turms des Panzers kaum zu merklichen Verwindungen. Auch ist der drehbare Turm groß genug, um mindestens einen Beobachter aufzunehmen. Es ist daher bei dieser Bauart möglich, sowohl das Periskoprohr als auch den Okulararm kurz auszubilden und fest an dem stabilen Turm zu befestigen.

Heutzutage werden neben den oben erwähnten Panzern klassischer, schwerer Bauart so genannte Leichtbaupanzer eingesetzt, beispielsweise des Typs "Puma". Bei diesen Leichtbaupanzern ist die Verwindungssteifigkeit, insbesondere zwischen Turm und Wanne, erheblich geringer. Hinzu kommt, dass bei derartigen Leichtbaupanzern der Turm unbemannt ist und der Kommandostand in den vorderen Bereich der Wanne verlagert ist. Der Okulararm muss daher entsprechend länger ausgelegt werden, beispielsweise mit einer Länge von 1,5 Metern.

Dies führt dazu, dass sich der Okulararm bei schneller Geländefahrt infolge von Trägheitskräften verbiegt, die auf die trägen Massen einwirken. Dabei treten in der Praxis Verschiebungen der im Okulararm befindlichen optischen Elemente senkrecht zur optischen Achse auf. Diese Verschiebungen können einige Millimeter betragen. Sie haben außer einer Bildverschlechterung auch eine merkliche Verschiebung der Sichtlinie zur Folge.

Aus der DE 103 23 331 A1 ist ein Periskop für einen derartigen Panzer bekannt. Die optische Übertragungsstrecke des Periskops enthält einen flexiblen Bildleiter mit optischen Fasern, um den negativen Einfluss von Erschütterungen und Verbiegungen des Okulararms auf die Bildqualität zu reduzieren.

Durch die Verwendung eines flexiblen Bildleiters in der optischen Übertragungsstrecke wird zwar eine gewisse mechanische Entkopplung für Vibrationen erreicht, das ändert aber nichts daran, dass die für die Bildgebung erforderlichen optischen Elemente unverändert vorhanden sein müssen und daher bei einer radialen Verschiebung Abbildungsfehler verursachen.

Die Verwendung eines Bildleiters in der optischen Übertragungsstrecke hat darüber hinaus den Nachteil, dass der Bildleiter in der Bildebene angeordnet werden muss, weswegen extrem hohe Sauberkeitsanforderungen erfüllt werden müssen, typischerweise wenige Fehlstellen von < 10 $\mu$m. In der Praxis sind derartige Anforderungen nicht erfüllbar, weil Bildleiter mit der benötigten hohen Anzahl von Bildpunkten auch eine hohe Anzahl von Fehlstellen aufweisen, beispielsweise gebrochene Fasern, Strukturfehler, Polierfehler auf den beiden Endflächen, oder Einschlüsse und Blasen innerhalb des langen Glasweges. Der vorgeschlagene Weg löst daher das oben geschilderte Problem nur teilweise. Die Verwendung eines Bildleiters in der optischen Übertragungsstrecke schränkt darüber hinaus selbst die Abbildungsqualität ein, weil ein Bildleiter immer mit Verlusten behaftet ist.

Aus der eingangs genannten GB 1 062 710 ist ein Periskop für ein Unterseeboot bekannt, das im Wesentlichen aus einem vertikalen Tubus besteht, an dessen oberem und unteren Ende jeweils eine Eintritts- bzw. Austrittsöffnung vorgesehen ist, die jeweils ein optisches Umlenkelement aufweist, so dass in horizontaler Richtung beobachtet werden kann. Der vertikale Tubus nimmt ein unteres Fernrohr, ein oberes Fernrohr sowie dazwischen zwei afokale Systeme auf. Wenn das Periskop quer zur Vertikalrichtung verbogen wird, dann wird das obere Teleskop relativ zum unteren Teleskop verbogen, so dass ein Bildversatz entsteht. Die afokalen Systeme sind dann infolge der Verbiegung unter unterschiedlichen Winkeln zur Vertikalachse geneigt. Die Positionierung dieser Systeme auf der Vertikalachse ist dabei derart gewählt, dass deren Versatzanteile eine Summe bilden, die so eingestellt ist, dass der durch die Verbiegung der Fernrohre verursachte Versatz kompensiert wird.

Derartige Periskope sind für Landfahrzeuge, insbesondere für Leichtbaupanzer der oben erläuterten Art, bauartbedingt nicht geeignet.

Der Erfindung liegt daher die Aufgabe zugrunde, ein Periskop der eingangs genannten Art zur Verwendung bei Panzern bereitzustellen, das die Nachteile des Standes der Technik vermeidet und eine gute Bildqualität sowie eine hohe Stabilität der Sichtlinie, d.h. eine Parallelität von Periskopachse und Zielachse, der optischen Übertragungsstrecke auch bei starken Erschütterungen sichert.

Erfindungsgemäß wird die Aufgabe bei einem Periskop der eingangs genannten Art dadurch gelöst, dass die optische Übertragungsstrecke sich zwischen dem zweiten optischen Umkehrelement und dem Okular erstreckt und dass eines der mindestens zwei optischen Elemente zwischen dem zweiten optischen Umkehrelement und einer zum Okular hin nachfolgend angeordneten Position eines vom Objekt erzeugbaren Zwischenbildes angeordnet ist.

Hierdurch wird der Ort des Objektbildes auf der abschließenden Bildebene konstant gehalten, auch wenn sich die optischen Elemente, die die Abbildung auf die abschließende Bildebene bewirken, quer zur optischen Achse der optischen Übertragungsstrecke verschieben, insbesondere wenn die optische Übertragungsstrecke mechanisch verbogen wird.

Erfindungsgemäß wird die Kompensation des Versatzes des Objektbildes vorzugsweise selbsttätig und passiv bewirkt, wobei die optischen Elemente im Tubus der optischen Übertragungsstrecke fest angeordnet sind. Die Positionierung der optischen Elemente ist dabei so gewählt, dass deren Versatzanteile sich gerade aufheben, wenn sich die Übertragungsstrecke entlang einer vorher bestimmbaren Biegelinie verbiegt.

In einer Weiterbildung dieses Konzeptes kann jedoch auch mindestens eines der mindestens zwei optischen Elemente entlang der optischen Achse verlagerbar ange-ordnet sein, wobei dann Mittel vorgesehen sind, um die jeweilige Verbiegung der optischen Übertragungsstrecke zu erfassen und daraus Signale zum Verlagern des mindestens einen optischen Elementes zur Minimierung des Versatzes zu erzeugen.

Diese Maßnahme hat den Vorteil, dass die Kompensation des Versatzes des Objektbildes aktiv bewirkt wird und noch präziser auf die sich jeweils einstellende Biegelinie abgestellt werden kann. Damit lassen sich auch dynamische Veränderungen der Biegelinie erfassen.

In einer weiteren bevorzugten Ausgestaltung ist vorgesehen, dass das Periskop eine das erste optische Umlenkelement und das zweite optische Umlenkelement enthaltende starre Grundeinheit und einen die optische Übertragungsstrecke enthaltenden Tubus aufweist.

Die starre Grundeinheit bildet das am Turm des Panzers drehbar gelagerte Rohr des Periskops.

In einer weiteren bevorzugten Ausgestaltung des Periskops ist das erste optische Umlenkelement und/oder das zweite optische Umlenkelement ein Spiegel.

Mittels des ersten und des zweiten Spiegels wird auf diese treffendes Licht jeweils um 90° umgelenkt, so dass aus einem zu betrachtenden Objekt ein parallel versetztes Objektbild erzeugt wird.

In einer weiteren bevorzugten Ausgestaltung des Periskops ist das erste optische Umlenkelement und/oder das zweite optische Umlenkelement ein Umlenkprisma.

Ein Umlenkprisma ist ein optisches Bauelement zur Umlenkung eines Lichtstrahls um 90°, das einfach montierbar ist.

In einer weiteren bevorzugten Ausgestaltung ist das zweite optische Umlenkelement ein Umkehrprisma.

Hierbei ist vorteilhaft, dass mittels des zweiten Umlenkelementes ein Zwischenbild unter 90° reflektiert wird und gleichzeitig das auf dem Kopf stehende Zwischenbild um 180° gedreht wird.

In einer weiteren bevorzugten Ausgestaltung des Periskops sind optische Umkehrelemente auf der ersten optischen Achse angeordnet.

Das Periskop kann mit zwei Spiegeln oder Umkehrprismen ausgestattet sein, wobei die Umlenkelemente ein auf dem Kopf stehendes Bild des Objektes umkehren, also eine Bildaufrichtung bewirken, falls dies notwendig ist.

In einer bevorzugten Ausgestaltung der optischen Übertragungsstrecke und des Periskops ist der Versatz des Objektbildes aus einer die Biegekurve beschreibenden Biegegleichung berechenbar.

Die Verbiegung der optischen Übertragungsstrecke kann im einfachsten Fall näherungsweise mit einer Biegekurve in Form eines Kreissegmentes mit einem Radius R beschrieben werden. Die Verschiebung des optischen Elementes an einem Ort x ist als Funktion des Radius berechenbar, wobei x=0 dem Ort der Befestigung der optischen Übertragungsstrecke entspricht, der keine Verschiebung aufweist. Der Versatz des Objektbildes in der abschließenden Bildebene, bekannt unter dem Begriff Bildversatz VS, ist aus der Summe der Verschiebungen für jedes einzelne optische Element berechenbar. Hierbei tragen die Verschiebungen der jeweiligen optischen Elemente linear zur Summe bei. Dies kann bei den üblichen optischen Elementen der optischen Übertragungsstrecke vorausgesetzt werden.

In einer weiteren bevorzugten Ausgestaltung der Erfindung ist die Verbiegung der optischen Übertragungsstrecke mit einer Biegegleichung für einen einseitig eingespannten Balken mit der Formel:

$$\Delta_x = 3 * \left( \Delta_s / x_s^3 \right) * \left( x_s * x^2 / 2 - x^2 / 6 \right)$$

beschreibbar, und der dadurch verursachte Versatz des Objektbildes in der abschließenden Bildebene ist mittels der Gleichung:

$$VS = 3 * \left( \Delta_s / x_s^3 \right) * \left\{ \left( x_s / 2 \right) * \left[ x_1^2 - (400 + x_1)^2 - x_4^2 + x_5^2 \right] \right.$$

$$\left. -1/6 \left[ x_1^3 - (400 + x_1)^3 - x_4^3 + x_5^3 \right] \right\}$$

berechenbar.

Die Gültigkeit dieser Biegegleichung für eine optische Übertragungsstrecke ist mit einem Versuchsaufbau und Messtastem auf eine Genauigkeit von 0,03 mm verifiziert worden.

In bevorzugter Ausgestaltung der Erfindung ist die Verbiegung mit einer Biegegleichung für einen beidseits eingespannten Balken beschreibbar, und der Versatz des Objektbildes in der abschließenden Bildebene ist daraus berechenbar.

Eine derartige Beschreibung der Biegekurve der Verbiegung der optischen Übertragungsstrecke kann auch eine nicht homogene optische Übertragungsstrecke berücksichtigen. Diese liegt beispielsweise bei in der Übertragungsstrecke angeordneten Versteifungen oder bei nicht gleichmäßiger Verteilung der optischen Elemente über die Länge der Übertragungsstrecke vor.

In einer weiteren bevorzugten Ausgestaltung der Erfindung ist die Verbiegung mit einer Biegegleichung für einen an mehreren Punkten eingespannten Balken beschreibbar, und der Versatz des Objektbildes in der abschließenden Bildebene ist daraus berechenbar.

Eine derartige Beschreibung beschreibt die Biegekurve noch genauer und liefert genauere Ergebnisse für den Versatz des Objektbildes, wenn mehr als zwei Versteifungen oder Halterungen in der optischen Übertragungsstrecke eingebaut sind.

In einer weiteren bevorzugten Ausgestaltung der Erfindung ist die Verbiegung mit der Methode der Finiten Elemente beschreibbar, und der Versatz des Objektbildes in der abschließenden Bildebene ist daraus berechenbar.

Die Finlte-Elexaclent-Methode (FEM) ist ein an sich bekanntes Verfahren zur Beschreibung des Festigkeitsverhaltens von geometrisch komplex geformten Körpern zweidimensionaler oder dreidimensionaler Art. Je nach Komplexität der optischen Übertragungsstrecke kann es notwendig sein, FEM zu verwenden, um die Biegekurve mit hinreichender Genauigkeit zu beschreiben.

In einer weiteren bevorzugten Ausgestaltung der Erfindung weist die optische Übertragungsstrecke mindestens drei optische Elemente auf.

Die Anzahl der optischen Elemente ist durch die Anforderungen an die optischen Abbildungseigenschaften sowie die Länge der optischen Übertragungsstrecke gegeben. Beispielsweise kann es zur Vergrößerung eines Gesichtfeldes des Periskops, das aufgrund der äußeren Gegebenheiten in dem gepanzerten Fahrzeug eine große Länge aufweisen muss, vorteilhaft sein, eine zusätzliche Feldlinse einzusetzen.

Weitere Vorteile ergeben sich aus der nachfolgenden Beschreibung und der beigefügten Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der vorliegende Erfindung werden nachfolgend anhand der Zeichnung näher erläutert.

In der Zeichnung zeigen:

Fig. 1:     eine schematische Darstellung eines Periskops mit einer optischen Übertragungsstrecke in axialem Längsschnitt;

Fig. 2a:    eine schematische Darstellung für eine Anordnung von optischen Elementen eines Versuchsaufbaus zur Auslegung einer optischen Übertragungsstrecke für das Periskop gemäß Fig. 1;

Fig. 2b:    die Verschiebung der optischen Elemente senkrecht zur optischen Achse der optischen Übertragungsstrecke, aufgrund einer Verbiegung eines die Übertragungsstrecke enthaltenden Okulararms;

Fig. 3:    den durch ein in der optischen Übertragungsstrecke angeordnetes optisches Element verursachten Versatz VS in Abhängigkeit seiner Position $x_1$; und

Fig. 4:    eine schematische Darstellung eines Verfahrens zur Auslegung der optischen Übertragungsstrecke.

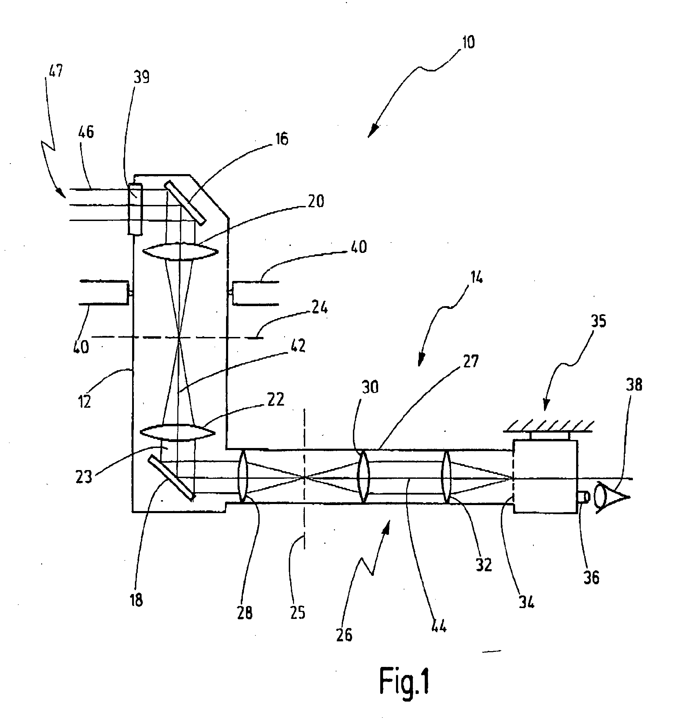

Fig. 1 zeigt ein Periskop 10 in schematischem axialem Längsschnitt. Das Periskop 10 weist ein, einen starren Grundkörper bildendes Rohr 12 und einen Okulararm 14 auf. In dem Rohr 12 sind ein erstes optisches Umlenkelement 16 und ein zweites optisches Umlenkelement 18 angeordnet. Zwischen dem ersten optischen Umlenkelement 16 und dem zweiten optischen Umlenkelement 18 sind mindestens eine erste, als Objektivlinse 20 bezeichnete Linse und eine zweite, als Feldlinse 22 bezeichnete Linse angeordnet. Wie bei 23 angedeutet, kann ein kollimierter Teil des Strahlenganges gegebenenfalls als Bildleiter ausgebildet sein.

Zwischen der Objektivlinse 20 und der Feldlinse 22 ist eine erste Zwischenbildebene 24 angeordnet, in der ein erstes Zwischenbild (hier nicht explizit dargestellt) eines zu betrachtenden Objektes dargestellt ist. Das erste optische Umlenkelement 16 kann ein Spiegel oder ein Umlenkprisma sein. Das zweite optische Umlenkelement 18 kann ebenfalls ein Spiegel, ein Umlenkprisma oder ein Umkehrprisma zur Erzeugung eines zweiten Zwischenbildes (hier nicht explizit dargestellt) in einer zweiten Zwischenbildebene 25 sein.

Der Okulararm 14 weist eine optische Übertragungsstrecke 26 mit einem Tubus 27 auf. In dem in Fig. 1 dargestellten Ausführungsbeispiel des Okulararms 14 weist die optische Übertragungsstrecke 26 eine erste Linse 28, eine zweite Linse 30 und eine dritte Linse 32 auf. Die erste Linse 28, die eingangsseitig am Okulararm 14 angeordnet ist, ist eine entlang einer optischen Achse 44 des Okulararms 14 gezielt positionierbare Linse, die gegebenenfalls auch aktiv verlagerbar sein kann.

Die erste Linse 28, die zweite Linse 30 und die dritte Linse 32 dienen der Erzeugung eines Objektbildes auf einer abschließenden Bildebene 34 und können Okularlinsen sein. Das Objektbild auf der abschließenden Bildebene 34 kann mittels eines direkt hinter der abschließenden Bildebene 34 angeordneten Okulars 36 mit einem Auge 38 beobachtet werden.

Ferner kann vorgesehen sein, eine CCD-Kamera zur Speicherung des Objektbildes in der Bildebene 34 anzuordnen (hier nicht dargestellt).

Das Rohr 12 des Periskops 10 ist in der Regel mittels einer Lagerung 40 an einem Turm, beispielsweise eines gepanzerten Fahrzeugs oder U-Bootes, drehbar gelagert. Ferner weist das Rohr 12 ein Fenster 39 auf. Der Okulararm 14 ist an seinem okularseitigen Ende bei 35 gelagert, d.h. mit der Wanne des Fahrzeugs verbunden. Diese Lagerung kann Dämpfungselemente aufweisen.

Der Tubus 27, und damit der Okulararm 14 mit der gesamten Übertragungsstrecke 26, ist von endlicher Steifigkeit. Dies bedeutet, dass sich der Okulararm 14 mit der Übertragungsstrecke 26 bei einer Verwindung des Turms relativ zur Wanne des Fahrzeugs verbiegt. Diese Verbiegung lässt sich dann, wenn der Okulararm 14 nur am okularseitigen Ende gelagert ist, näherungsweise als Verbiegung eines einseitig eingespannten Balkens beschreiben. Wenn der Okulararm 14, wie in der Praxis üblich und wie in Figur 1 bei 35 und 40 gezeigt, beidendig gelagert ist, kann man auf die Biegelinie eines beidendig eingespannten Balkens zurückgreifen.

Die in dem starren Rohr 12 angeordneten optischen Elemente 20 und 22 definieren eine erste optische Achse 42, und die optischen Elemente 28, 30 und 32 der optischen Übertragungsstrecke 26 des Okulararms 14 definieren eine zweite optische Achse 44. Hierbei schließen die erste optische Achse 42 und die zweite optische Achse 44 einen Winkel von 90° ein.

Lichtstrahlen 46, die in einer Einfallsrichtung 47 senkrecht zur ersten optischen Achse 42 verlaufen, treten durch das Fenster 39 in das Periskop 10 ein. Sie werden mittels des ersten Umlenkelements 16 in Richtung der ersten optischen Achse 42 umgelenkt und dann parallel versetzt zur ursprünglichen Einfallsrichtung 47 mittels des zweiten Umlenkelements 18 auf die zweite optische Achse 44 des Okulararms 14 gelenkt. Somit entsteht auf der abschließenden Bildebene 34 das parallel versetzte Objektbild (hier nicht dargestellt) des zu betrachtenden Objektes (hier ebenfalls nicht dargestellt).

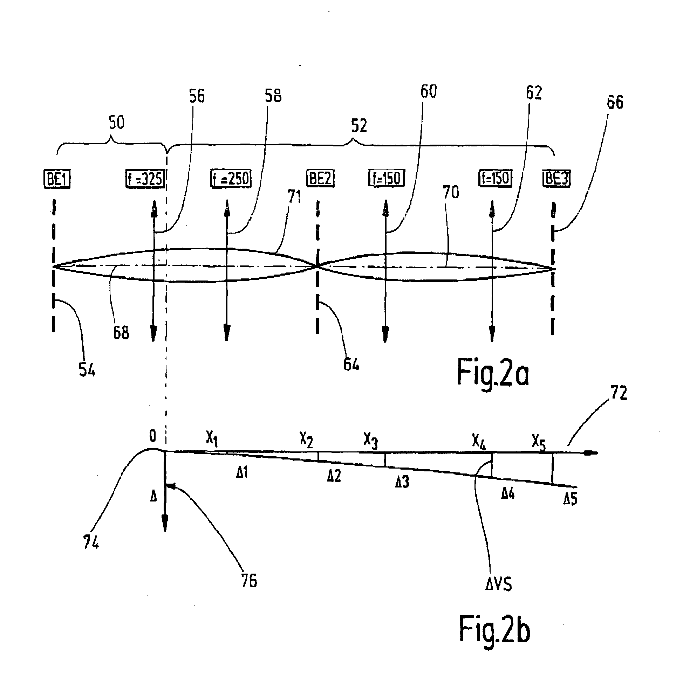

In Fig. 2a ist eine Anordnung für einen Versuchsaufbau zur Auslegung einer optischen Übertragungsstrecke in schematischer Darstellung gezeigt.

Gleiche Elemente sind mit gleichen Bezugsziffern wie in Fig. 1 bezeichnet.

Der Versuchsaufbau weist einen starren Abschnitt 50 und einen biegsamen Abschnitt 52 auf. Im starren Abschnitt 50 sind eine erste Zwischenbildebene 54 (gestrichelt dargestellt) und eine Linse 56 (als Pfeil dargestellt) angeordnet. Der zweite Abschnitt 52 weist drei optische Elemente, eine erste Linse 58, eine zweite Linse 60 und eine dritte Linse 62 auf. Oberhalb der als Pfeil dargestellten Linsen sind die jeweiligen Brennweiten f angegeben.

Ein in Fig. 2a nicht dargestelltes Objekt wird von der ersten Zwischenbildebene 54 auf eine zweite Zwischenbildebene 64 und schließlich auf eine abschließende Bildebene 66 abgebildet. Die in dem Versuchsaufbau verwendeten Brennweiten f der Linsen 58 und 60 sowie 62 sind jeweils mit f angegeben.

Der Abschnitt 50 weist eine erste optische Achse 68 und der Abschnitt 52 eine zweite optische Achse 70 auf, wobei die erste und die zweite optische Achse in dem in Fig. 2a dargestellten Versuchsaufbau zusammenfallen.

In Fig. 2b ist mit $x_1$, $x_2$, $x_3$, $x_4$ und $x_5$ die jeweilige Position der zugehörigen optischen Elemente 58, 60 und 62 sowie der Zwischenbildebene 64 und der abschließenden Bildebene 66 bezeichnet. Mit $\Delta_1$, $\Delta_2$, $\Delta_3$, $\Delta_4$ und $\Delta_5$ ist eine Verschiebung $\Delta$ bezeichnet, die die Verschiebung des zuordneten optischen Elementes bzw. der zugeordneten Bildebene an den Positionen $x_1$, $x_2$, $x_3$, $x_4$ und $x_5$ bezeichnet.

Dargestellt ist insbesondere die Größe der Verschiebung in der zugehörigen Position für eine Verbiegung des zweiten Abschnittes 52 in Richtung des Pfeils 76.

Hierbei ist erkennbar, dass die Verschiebung $\Delta$ bezogen auf die Position x um so größer ist, je weiter die Position x von der Befestigung des Okulararmes an der Position x = 0 entfernt ist. Die Verschiebung $\Delta_5$ des Objektbildes auf der abschließenden Bildebene 66 an der Position $x_5$ ist am größten.

Bei der Darstellung des Versuchaufbaus ist der Okulararm 14 des Periskops durch den zweiten Abschnitt 52 simuliert, so dass das optische Element 58 der Linse 28, das optische Element 60 der Linse 32 und das optische Element 62 der Linse 32 entspricht. Ferner entspricht die Position der Zwischenbildebene 64 der der Zwischenbildebene 25, und die Position der abschließenden Bildebene 34 entspricht der Position der Bildebene 66 in der optischen Übertragungsstrecke des Periskops.

Der starre Teil 50 ist ein Kollimator, der ein beleuchtetes Fadenkreuz von der Bildebene 64 nach $\infty$ abbildet, Der Tubus 27 von $x_1$ = 0 bis $x_s$ = 1000 mm besteht aus zwei hochkant gestellten Aluminium-Leisten mit 10x20 mm Querschnitt, die in der Sagittal-Ebene im gleichen Abstand beidseitig der optischen Achse 70 verlaufen. Daran sind die Fassungen der Linsen angeklemmt. Mit einer hier nicht dargestellten, am rechten Ende in etwa auf der Höhe der Position $x_5$ angeordneten Stellschraube kann die Biegung des Tubus 27 eingestellt werden. Abgelesen wird die eingestellte Biegung an einem hier nicht dargestellten Messtaster an der Position $x_s$. Ein Fadenkreuz in der Bildebene 64 wird auf die abschließende Bildebene 66 abgebildet und mittels einer CCD-Kamera mit 2038 x 2038 Elementen abgebildet. Hierbei beträgt ein Pitch, d.h. der Mittenabstand zweier benachbarter Strukturen, 7,4 μm.

Mit diesem Versuchsaufbau wurde die Situation für einen Okulararm 14 eines Periskops 10 simuliert. Im einfachsten Fall wird die Verbiegung des Abschnittes 52 mit einer Biegekurve mit dem Radius R beschrieben. Es wird ein Radius von R = 500.000 mm angenommen. Daraus ergibt sich eine Verschiebung in Abhängigkeit der Position x von $\Delta = x^2/2R$.

Der Versatz VS setzt sich zusammen aus der Summe der Verschiebungen $\Delta_i$, für i = 1 bis 5:

$$VS = \sum \Delta_i \qquad (1)$$

Die in der Gleichung (1) zum Ausdruck kommende Linearität kann bei Systemen aus den üblichen optischen Bauelementen vorausgesetzt werden.

Kann man nun eine Gleichung für die Verschiebung $\Delta_{(x)}$ in Abhängigkeit vom Ort x angeben, also;

$$\Delta_{(x)} = f_{(x)}, \qquad (2)$$

und setzt diese Gleichung (2) in Gleichung (1) ein, so erhält man für den Versatz VS die folgende Gleichung:

$$VS = \sum f_{(xi)}, \qquad (3)$$

Durch Variieren von einer oder mehreren der Ortsvariablen $x_1$ lässt sich der Bildversatz VS minimieren, d.h. eine Konstanthaltung des Ortes des Objektbildes erreichen. Die Voraussetzung hierfür ist, dass die Summanden von Gleichung (1) verschiedene Vorzeichen aufweisen und das optische Design der optischen Übertragungsstrecke die Freiheit offen lässt, ohne Beeinträchtigung der Abbildung eines oder mehrere optische Elemente entlang der optischen Achse zu verschieben.

Die zweitgenannte Forderung lässt sich beispielsweise dadurch erfüllen, dass Passagen eines kollimierten Strahlengangs eingefügt werden.

Das Verfahren funktioniert auch, wenn der durch ein Element an der Position $x_i$ verursachte Bildversatzanteil nicht direkt proportional zu seiner Bildzentrierung ist, oder sich kein geschlossener Ausdruck $\Delta_{(x)}$ finden lässt, der für alle optischen Elemente an den Positionen $x_1$ brauchbar ist. Hierbei wird lediglich Gleichung (2) komplexer, eventuell müssen auch mehrere Parameter herangezogen werden, um eine passende Nullstelle zu finden.

Unberücksichtigt bleibt bei dieser Beschreibung der optischen Übertragungsstrecke, dass eine Verbiegung gleichzeitig eine mit dieser einhergehende Verkippung der optischen Elemente induziert, weil ihre optische Wirkung bei nicht zu großer Biegeamplitude gering ist.

Für die Verschiebung $\Delta_{(x)}$ in Abhängigkeit vom Ort x kann folgende Biegegleichung angenommen werden:

$$\Delta_x = 3 * \left(\Delta_s / x_s^3\right) * \left(x_s * x^2 / 2 - x^3 / 6\right). \quad (4)$$

Für den Versatz VS als die Summe der Verschiebungen $\Delta$ ergibt sich dann die folgen-de Gleichung:

$$VS = 3 * \left(\Delta_s / x_s^3\right) * \Big\{(x_s / 2) * \left[x_1^2 - (400 + x_1)^2 - x_4^2 + x_5^2\right] \quad (5)$$
$$- 1 / 6 * \left[x_1^3 - (400 + x_1)^3 - x_4^3 + x_5^3\right]\Big\}.$$

Aufgrund der gewählten Brennweiten und Bildebenen dürfen nur die Elemente an den Positionen $x_1$ und $x_3$ verschoben werden, wobei der Abstand $x_1$ - $x_3$ beizubehalten ist. Als Gleichungsvariable bleibt somit nur die Verschiebung des optischen Elements an der Position $x_1$ übrig.

Aus dieser Gleichung kann ermittelt werden, welche der optischen Elemente 58, 60 oder 62 gezielt positioniert bzw. verschoben werden müssen, um einen Versatz von Null an der Position $x_5$, also in der abschließenden Bildebene 34, zu erzielen. Als Randbedingung gilt hierbei, dass die gewählten Brennweiten und Bildebenen dazu führen, dass nur die Elemente an den Positionen $x_1$ und $x_3$ verschoben werden dürfen, wobei der Abstand der Position $x_1$ zu $x_3$ beibehalten werden muss.

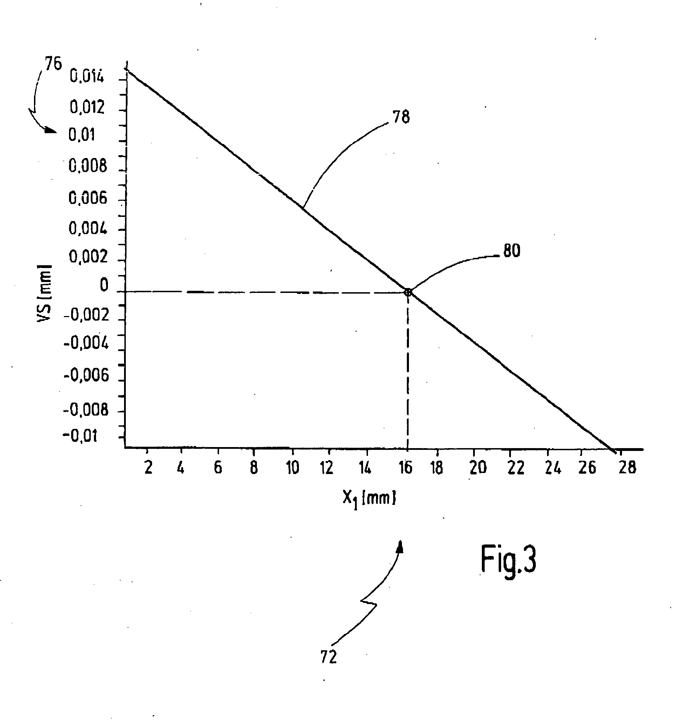

Die Position $x_1$ und $x_3$ muss deshalb konstant gehalten werden, da die Abbildung von der zweiten Zwischenbildebene 25 auf die abschließende Bildebene 34 mittels der Linse 30 an der Position $x_3$ und der Linse 32 an der Position $x_4$ erfolgt. Eine numerische Lösung der Gleichung (5) ergibt als Verschiebung für die Position der Linse 28 einen Wert von 16,1 mm. Diese numerische Lösung der Gleichung ist in Fig. 3 dargestellt.

Somit kann durch eine Positionierung der Linse 28 bei x = 16,1 mm bzw. durch eine Verlagerung auf diese Position eine Kompensation des Versatzes VS der Lage des Objektbildes in der abschließenden Bildebene 34 realisiert werden.

Im Folgenden seien noch einmal in der unten aufgeführten Tabelle die Messergebnisse für zwei der durchgerührten Versuche 1 und 2 zusammengefasst.

| $\Delta s$[mm] | VS[pixel] | VS[$\mu$m] |
|---|---|---|
| 1 | -2 | 15 |
| 2 | -3 | 22,5 |

In Fig. 3 ist der Versatz VS in der abschließenden Bildebene der eingangsseitig angeordneten Linse 28 und 58 als Funktion der Position $x_1$ dargestellt.

Die Lösung erhält man durch Spiegelung des Ordinatenwertes VS=0 an der Geraden im Punkt 80, was zu einem Wert von $x_1$=16,1 mm führt.

Der in der vorstehenden Tabelle aufgeführte Wert des Versatzes VS von 15 $\mu$m für 1 mm Auslenkung dürfte auf die Auslenkungsgrenze von 1 Pixel zurückzuführen sein. Ferner sind die Messergebnisse der Verschiebungen von 15 $\mu$m und 22,5 $\mu$m in den Versuchen darauf zurückzuführen, dass der Laboraufbau Unzulänglichkeiten aufweist, wie z.B. dass die Hauptebene der Linsen und ihre Befestigungspunkte am Tubus nicht identisch sind.

Ein während des Einsatzes des Periskops 10 festgestellter Versatz des Objektbildes in der abschließenden Bildebene 34, kann nicht nur passiv, d.h. statisch durch entsprechende Positionierung des jeweiligen optischen Elements, sondern auch dynamisch durch die Verlagerung der Position z.B. der Linse 28, kompensiert werden. Dies geschieht beispielsweise mittels einer Verstellung der die Linse haltenden Fassung relativ zum Tubus 27. Eine Verstellung der Position der Fassung ist beispielsweise mechanisch mittels einer Stellschraube möglich, die über einen entsprechenden Servoantrieb betätigt wird. In diesem Falle wird die tatsächlich vorliegende Durchbiegung der Übertragungsstrecke 26 mittels geeigneter Sensoren (nicht dargestellt) erfasst. Aus den erfassten Werten werden Stellsignale für den Servoantrieb abgeleitet.

Bei einer anderen Auslegung der optischen Übertragungsstrecke, beispielsweise mit mehr Linsen oder Linsen mit anderen Brennweiten, ist eine entsprechende Biegegleichung aufzustellen und die Verlagerung eines der optischen Elemente beispielsweise durch numerisches Lösen derselben zu erhalten. Es kann gegebenenfalls auch notwendig sein, zusätzliche optische Elemente zur Kompensation des Versatzes VS des Objektbildes in der abschließenden Bildebene einzufügen.

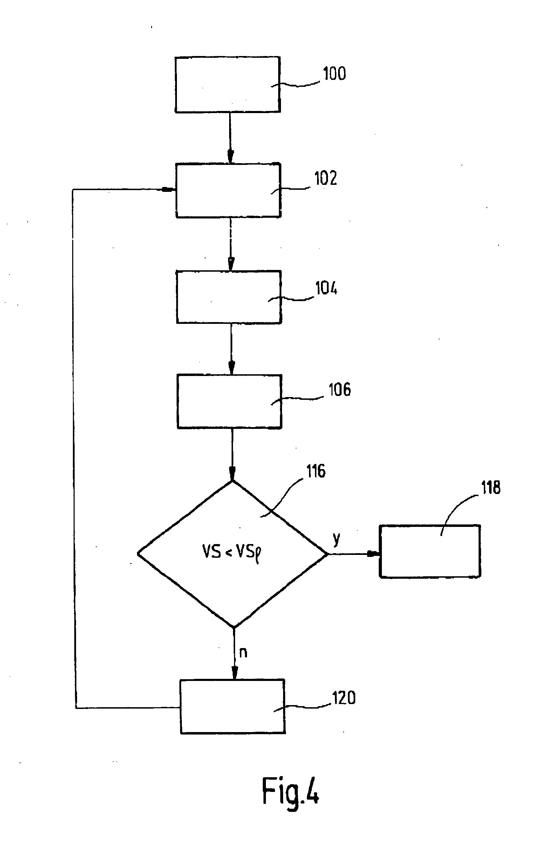

In Fig. 4 ist ein Verfahren zur Auslegung der optischen Übertragungsstrecke zusammenfassend dargestellt. Das Verfahren umfasst folgende Verfahrensschritte:

- Verfahrensschritt 100: Festlegen der optischen Elemente 28, 30, 32 und deren Position auf der optischen Achse 44 der optischen Übertragungsstrecke 26 zur Erzeugung eines Objektbildes von einem Zwischenbild eines Objektes,

- Verfahrensschritt 102: Aufstellen einer Biegegleichung zur Beschreibung einer Biegekurve einer erwarteten Verbiegung des Okulararmes 14 unter Einbeziehung des mechanischen Aufbaus des Okulararmes 14,

- Verfahrensschritt 104: Berechnen des Versatzes VS der Position des Objektbildes in der abschließenden Bildebene 34 mit der im Verfahrensschritt 102 aufgestellten Biegegleichung,

- Verfahrensschritt 106: Berechnen eines Wertes für eine Positionierung entlang der optischen Achse 44 eines der optischen Elemente 28, 30, 32, wobei die Positionierung geeignet ist, den Versatz des Objektbildes zu kompensieren,

- Verfahrensschritt 116: Überprüfen, ob mit dem in Schritt (d) berechneten Wert der sich ergebende Versatz VS kleiner als ein vorgegebener Grenzwert $VS_1$ ist;

- Verfahrensschritt 118: falls der sich ergebende Versatz VS kleiner als der vorgegebene Grenzwert $VS_1$ ist: Positionieren des mindestens einen der optischen Elemente an der in Schritt (d) bestimmten Position in der optischen Übertragungsstrecke 26; bzw.

- Verfahrensschritt 120: falls der sich ergebende Versatz VS nicht kleiner als der vorgegebene Grenzwert $VS_1$ ist: zurück zu Schritt (a) mit neuen Parametern für eine Brennweite und/oder eine Anzahl der optischen Elemente und/oder eine Anzahl von Umkehrsystemen in der optischen Übertragungsstrecke.

**Patentansprüche**

1. Periskop, aufweisend ein erstes optisches Umlenkelement (16), ein zweites optisches Umlenkelement (18), ein Okular (36) und eine optische Übertragungsstrecke (26) mit mindestens zwei optischen Elementen (28, 30, 32), die entlang einer optischen Achse (44) der optischen Übertragungsstrecke (26) angeordnet sind und ein Objektbild eines Zwischenbildes auf einer abschließenden Bildebene (34) der optischen Übertragungsstrecke (26) erzeugen, wobei die Übertragungsstrecke (26) quer zur optischen Achse (44) biegsam ist und sich die mindestens zwei optischen Elemente (28, 30, 32) bei einer Verbiegung entsprechend einer sich einstellenden Biegelinie senkrecht zur optischen Achse (44) verschieben, so dass ein Versatz (76) des Objektbildes entsteht, wobei ferner die mindestens zwei optischen Elemente (28, 30, 32) derart entlang der optischen Achse (44) angeordnet sind, dass Versatzanteile der mindestens zwei optischen Elemente (28, 30, 32), die durch die Verschiebung der mindestens zwei optischen Elemente (28, 30, 32) verursacht sind, einander kompensieren, so dass der Versatz (76) des Objektbildes in der abschließenden Bildebene (34) minimiert ist, **dadurch gekennzeichnet, dass** die optische Übertragungsstrecke (26) sich zwischen dem zweiten optischen Umlenkelement (18) und dem Okular (36) erstreckt und dass eines (28) der mindestens zwei optischen Elemente (28, 30, 32) zwischen dem zweiten optischen Umlenkelement (18) und einer zum Okular (36) hin nachfolgend angeordneten Position eines vom Objekt erzeugbaren Zwischenbildes angeordnet ist.

2. Periskop nach Anspruch 1, **dadurch gekennzeichnet, dass** mindestens eines der mindestens zwei optischen Elemente (28) entlang der optischen Achse (44) verlagerbar angeordnet ist, und dass Mittel vorgesehen sind, um die jeweilige Verbiegung der optischen Übertragungsstrecke (26) zu erfassen und daraus Signale zum Verlagern des mindestens einen optischen Elementes (28) zur Minimierung des Versatzes (76) zu erzeugen.

3. Periskop nach Anspruch 1 oder 2, **dadurch gekennzeichnet, dass** das Periskop (10) eine das erste optische Umlenkelement (16) und das zweite optische Umlenkelement (18) enthaltende starre Grundeinheit (12) und einen die optische Übertragungsstrecke (26) enthaltenden Tubus (27) aufweist.

4. Periskop nach einem der Ansprüche 1 bis 3, **dadurch gekennzeichnet, dass** das erste optische Umlenkelement (16) und/oder das zweite optische Umlenkelement (18) ein Spiegel ist.

5. Periskop nach einem der Ansprüche 1 bis 4, **dadurch gekennzeichnet, dass** das erste optische Umlenkelement (16) und/oder das zweite optische Umlenkelement (18) ein Umlenkprisma ist.

6. Periskop nach Anspruch 5, **dadurch gekennzeichnet, dass** das zweite optische Umlenkelement (18) ein Umkehrprisma ist.

7. Periskop nach einem der Ansprüche 1 bis 6, **dadurch gekennzeichnet, dass** auf der ersten optischen Achse (42) angeordnete Umkehrlinsen vorgesehen sind.

8. Periskop nach einem oder mehreren der Ansprüche 1 bis 7, **dadurch gekennzeichnet, dass** der Versatz (76) des Objektbildes aus einer die Biegekurve beschreibenden Biegegleichung berechenbar ist.

9. Periskop nach Anspruch 8, **dadurch gekennzeichnet, dass** die Verbiegung der optischen Übertragungsstrecke mit einer Biegegleichung für einen einseitig eingespannten Balken mit der Formel:

$$\Delta_x = 3 * \left(\Delta_s / x_s^3\right) * \left(x_s * x^2 / 2 - x^3 / 6\right)$$

beschreibbar ist und dass der dadurch verursachte Versatz (76) des Objektbildes in der abschließenden Bildebene (34) mittels der Gleichung:

$$VS = 3 * \left(\Delta_s / x_s^3\right) * \left\{\left(x_s / 2\right) * \left[x_1^2 - \left(400 + x_1\right)^2 - x_4^2 + x_5^2\right]\right.$$

$$\left. -1/6[x_1^3 - (400 + x_1)^3 - x_4^3 + x_5^3]\right\}$$

berechenbar ist.

10. Periskop nach Anspruch 9, **dadurch gekennzeichnet, dass** die Verbiegung mit einer Biegegleichung für einen beidseits eingespannten Balken beschreibbar ist, und dass der Versatz (76) des Objektbildes in der abschließenden Bildebene (34) daraus berechenbar ist.

11. Periskop nach Anspruch 9, **dadurch gekennzeichnet, dass** die Verbiegung mit einer Biegegleichung für einen an mehreren Punkten eingespannten Balken beschreibbar ist, und dass der Versatz (76) des Objektbildes in der abschließenden Bildebene (34) daraus berechenbar ist.

12. Periskop nach einem der Ansprüche 9 bis 11, **dadurch gekennzeichnet, dass** die Verbiegung mit der Methode der Finiten Elemente (FEM) beschreibbar ist und dass der Versatz des Objektbildes in der abschließenden Bildebene (34) daraus berechenbar ist.

**13.** Periskop nach einem der Ansprüche 1 bis 12, **dadurch gekennzeichnet, dass** die optische Übertragungsstrecke (26) mindestens drei optische Elemente (28, 30, 32) aufweist.

**14.** Periskop, nach einem der Ansprüche 1 bis 13, **dadurch gekennzeichnet, dass** die optische Übertragungsstrecke (26) einen Tubus (27) aufweist, wobei die optischen Elemente (28, 30, 32) jeweils mittels einer Fassung mit dem Tubus (27) mechanisch verbunden sind.

**15.** Periskop nach einem der Ansprüche 1 bis 14, **dadurch gekennzeichnet, dass** die optischen Elemente (28, 30, 32) ein optisches Umkehrsystem bilden.

**Claims**

**1.** Periscope, exhibiting a first optical redirecting element (16), a second optical redirecting element (18), an eyepiece (36) and an optical transmission path (26) with at least two optical elements (28, 30, 32) which have been arranged along an optical axis (44) of the optical transmission path (26) and which generate an object image of an intermediate image on a final image plane (34) of the optical transmission path (26), wherein the transmission link (26) is bendable at right angles to the optical axis (44) and the at least two optical elements (28, 30, 32) are displaced in the event of a bending, corresponding to a bending line arising, perpendicular to the optical axis (44), so that an offset (76) of the object image arises, wherein furthermore the at least two optical elements (28, 30, 32) have been arranged along the optical axis (44) in such a manner that offset portions of the at least two optical elements (28, 30, 32), which have been caused by the displacement of the at least two optical elements (28, 30, 32), compensate one another, so that the offset (76) of the object image in the final image plane (34) is minimised, **characterised in that** the optical transmission path (26) extends between the second optical redirecting element (18) and the eyepiece (36), and **in that** one (28) of the at least two optical elements (28, 30, 32) has been arranged between the second optical redirecting element (18) and a position, arranged downstream towards the eyepiece (36), of an intermediate image that is capable of being generated by the object.

**2.** Periscope according to Claim 1, **characterised in that** at least one of the at least two optical elements (28) has been arranged so as to be capable of being relocated along the optical axis (44), and **in that** means have been provided in order to register the respective bending of the optical transmission path (26) and to generate therefrom signals for relocating the at least one optical element (28) for the purpose of minimising the offset (76).

**3.** Periscope according to Claim 1 or 2, **characterised in that** the periscope (10) exhibits a rigid base unit (12), containing the first optical redirecting element (16) and the second optical redirecting element (18), and a tube (27) containing the optical transmission path (26).

**4.** Periscope according to one of Claims 1 to 3, **characterised in that** the first optical redirecting element (16) and/or the second optical redirecting element (18) is a mirror.

**5.** Periscope according to one of Claims 1 to 4, **characterised in that** the first optical redirecting element (16) and/or the second optical redirecting element (18) is a redirecting prism.

**6.** Periscope according to Claim 5, **characterised in that** the second optical redirecting element (18) is an erecting prism.

**7.** Periscope according to one of Claims 1 to 6, **characterised in that** erecting lenses arranged on the first optical axis (42) have been provided.

**8.** Periscope according to one or more of Claims 1 to 7, **characterised in that** the offset (76) of the object image is calculable from a bending equation describing the bending curve.

**9.** Periscope according to Claim 8, **characterised in that** the bending of the optical transmission path is describable by a bending equation for a unilaterally clamped bar, with the formula:

$$\Delta_x = 3 * (\Delta_5 / x_5^3)*(x_5 * x^2 / 2 - x^3 / 6)$$

and **in that** the offset (76), caused thereby, of the object image in the final image plane (34) is calculable by means of the equation:

$$OS = 3 * (\Delta_5 / x_5^3) * \{(x_5 / 2)*[x_1^2 - (400 + x_1)^2 - x_4^2 + x_5^2]$$

$$-1/6 \; [x_1^3 -(400 + x_1)^3 - x_4^3 + x_5^3 \;]\}.$$

10. Periscope according to Claim 9, **characterised in that** the bending is describable by a bending equation for a bar clamped at both ends, and **in that** the offset (76) of the object image in the final image plane (34) is calculable therefrom.

11. Periscope according to Claim 9, **characterised in that** the bending is describable by a bending equation for a bar clamped at several points, and **in that** the offset (76) of the object image in the final image plane (34) is calculable therefrom.

12. Periscope according to one of Claims 9 to 11, **characterised in that** the bending is describable by the finite element method (FEM), and **in that** the offset of the object image in the final image plane (34) is calculable therefrom.

13. Periscope according to one of Claims 1 to 12, **characterised in that** the optical transmission path (26) exhibits at least three optical elements (28, 30, 32).

14. Periscope according to one of Claims 1 to 13, **characterised in that** the optical transmission path (26) exhibits a tube (27), the optical elements (28, 30, 32) each having been mechanically connected to the tube (27) by means of a mounting.

15. Periscope according to one of Claims 1 to 14, **characterised in that** the optical elements (28, 30, 32) form an optical erecting system.

**Revendications**

1. Périscope comportant un premier élément optique de déviation (16), un deuxième élément optique de déviation (18), un oculaire (36) et un trajet de transmission optique (26) avec au moins deux éléments optiques (28, 30, 32) qui sont disposés le long d'un axe optique (44) du trajet de transmission optique (26) et qui génèrent une image d'objet d'une image intermédiaire sur un plan image (34) en fin du trajet de transmission optique (26), dans lequel le trajet de transmission optique (26) peut être incurvé transversalement par rapport à l'axe optique (44) et lesdits au moins deux éléments optiques (28, 30, 32) se décalent en correspondance, selon une ligne de courbure déterminée, perpendiculaire à l'axe optique (44), lors d'une incurvation, de telle manière qu'il en résulte une déformation (76) de l'image de l'objet, dans lequel, en plus, lesdits au moins deux éléments optiques (28, 30, 32) sont disposés le long de l'axe optique (44) de telle manière que les parts de déformation desdits au moins deux éléments optiques (28, 30, 32), qui sont concernés par le déplacement desdits au moins deux éléments optiques (28, 30, 32), se compensent, de sorte que la déformation (76) de l'image de l'objet sur le plan image (34) terminal est minimisée, **caractérisé en ce que** le trajet de transmission optique (26) s'étend entre le second élément optique de déviation (18) et l'oculaire (36) et **en ce que** l'un (28) desdits au moins deux éléments optiques (28, 30, 32) est localisé entre le second élément de déviation (18) et une position située après l'oculaire (36), d'une image intermédiaire générée de l'objet.

**2.** Périscope selon la revendication 1, **caractérisé en ce que**, ledit au moins un des au moins deux éléments optiques (28) est disposé le long de l'axe optique (44) de façon à pouvoir être étendu, et que des moyens sont prévus pour capter l'éventuelle incurvation du trajet de transmission optique (26) et pour en extraire des signaux pour déplacer ledit au moins un élément optique (28) en vue de minimiser la déformation (76).

**3.** Périscope selon les revendications 1 ou 2, **caractérisé en ce que** le périscope (10) comporte une unité de base fixe (12) comprenant le premier élément optique de déviation (16) et le deuxième élément optique de déviation (18), et un tube (27) contenant le trajet de transmission optique (26).

**4.** Périscope selon l'une des revendications 1 à 3, **caractérisé en ce que** le premier élément optique de déviation (16) et/ou le deuxième élément optique de déviation (18) est un miroir.

**5.** Périscope selon l'une des revendications 1 à 4, **caractérisé en ce que** le premier élément optique de renvoi (16) et/ou le deuxième élément optique de renvoi (18) est un prisme de déviation.

**6.** Périscope selon la revendication 5, **caractérisé en ce que** le deuxième élément optique de déviation (18) est un prisme de déviation.

**7.** Périscope selon l'une des revendications 1 à 6, **caractérisé en ce que** des lentilles de déviation sont disposées sur le premier axe optique (42).

**8.** Périscope selon l'une des revendications 1 à 7, **caractérisé en ce que** la déformation (76) du trajet optique est calculée à partir d'une des équations définissant la courbe d'incurvation.

**9.** Périscope selon la revendication 8, **caractérisé en ce que** l'incurvation du trajet de transmission optique peut être définie pour une poutrelle monoface insérée, au moyen d'une équation selon la formule :

$$\Delta_x = 3 * (\Delta_5 / x_5^3) * (x_5 * x^2 / 2 - x^3 / 6)$$

et **en ce que** l'incurvation résultante (76) ainsi provoquée de l'image de l'objet sur le plan image final (34) peut être calculée selon l'équation :

$$VS = 3 * (\Delta_5 / x_5^3) * \{(x_5 / 2) * [x_1^2 - (400 + x_1)^2 - x_4^2 + x_5^2]$$
$$-1/6[x_1^3 - (400 + x_1)^3 - x_4^3 + x_5^3]\}$$

**10.** Périscope selon la revendication 9, **caractérisé en ce que** l'incurvation peut être déterminée par une équation pour une poutrelle biface insérée, et **en ce que** l'incurvation (76) de l'image de l'objet sur le plan image final (34) peut en être déduite.

**11.** Périscope selon la revendication 9, **caractérisé en ce que** l'incurvation peut être déterminée par une équation pour une poutrelle insérée en divers points, et **en ce que** l'incurvation (76) de l'image de l'objet sur le plan image final (34) peut en être déduite.

**12.** Périscope selon l'une des revendications 9 à 11, **caractérisé en ce que** l'incurvation peut être définie par la méthode des éléments finis (FEM) et **en ce que** l'incurvation (76) de l'image de l'objet sur le plan image final (34) peut en être déduite.

**13.** Périscope selon l'une des revendications 1 à 12, **caractérisé en ce que** le trajet de transmission optique (26) comporte au moins trois éléments optiques (28, 30, 32).

**14.** Périscope selon l'une des revendications 1 à 13, **caractérisé en ce que** le trajet de transmission optique (26) comporte un tube (27), dans lequel les éléments optiques (28, 30, 32) sont fixés mécaniquement au tube (27) respectivement au moyen d'une fixation.

**15.** Périscope selon l'une des revendications 1 à 14, **caractérisé en ce que** les éléments optiques (28, 30, 32) constituent une lentille optique de redressement.

Fig.1

Fig.2a

Fig.2b

Fig.3

Fig.4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 1062710 A
- US 3352618 A
- US 3261260 A

- EP 0123628 A
- EP 1467237 A1
- DE 10323331 A1